# EUROPEAN PATENT APPLICATION

(11) **EP 4 740 802 A1**
(43) Date of publication of application: **13.05.2026**
(21) Application number: 24861647.6
(22) Date of filing: 03.07.2024
(51) Int. Cl.: A47J 31/52, A47J 31/46

(54) **FLOW RATE CONTROL APPARATUS AND METHOD FOR EXTRATCTION PRESSURE, ELECTRONIC DEVICE AND STORAGE MEDIUM**

(30) Priority: 08.09.2023 CN 202311155381
(71) Applicant: Maxi (Beijing) International Brand Management Co., Ltd., Beijing 100081 (CN)
(72) Inventor: CHEN, Yu, Beijing 100081 (CN); NG, Kwok Yui Lawrence, Beijing 100081 (CN)
(74) Representative: Lapienis, Juozas
(86) International application number: PCT/CN2024/103370
(87) International publication number: WO 2025/050801

(57) **Abstract**

A flow rate control apparatus and method for extraction pressure, an electronic device and a storage medium. In the control apparatus, a first end of a first electromagnetic pump (110) and a first end of a second electromagnetic pump (120) are both connected to a first end of a flow meter (140), a second end of the flow meter (140) is connected to a water tank (130), and second ends of the first electromagnetic pump (110) and the second electromagnetic pump (120) are both connected to a first end of a heating boiler module (150); water delivery pipes between the second ends of the first electromagnetic pump (110) and second electromagnetic pump (120) and the first end of the heating boiler module (150) are respectively connected to a first end of a first pinhole pressure relief valve module (160) and a first end of a second pinhole pressure relief valve module (170), and a second end of the first pinhole pressure relief valve module (160) and a second end of the second pinhole pressure relief valve module (170) are both connected to the water tank (130); and a second end of the heating boiler module (150) is connected to a first end of an extraction solenoid valve (180), a second end of the extraction solenoid valve (180) is connected to an extraction head (10-10), and an extraction pressure sensor (190) is provided between the extraction solenoid valve (180) and the extraction head (10-10), thereby ensuring sufficient flow rate and water volume for effective and stable coffee extraction.

## Description

### CROSS-REFERENCE TO RELATED APPLICATION

The present invention claims priority to Chinese Patent Application No. 2023111553816 filed with the China National Intellectual Property Administration on September 08, 2023, and entitled "FLOW RATE CONTROL APPARATUS AND METHOD FOR EXTRACTION PRESSURE, ELECTRONIC DEVICE AND STORAGE MEDIUM", the contents of which are incorporated herein by reference in entirety.

### TECHNICAL FIELD

The present invention relates to the technical field of coffee machines, and in particular, to a flow rate control apparatus and method for extraction pressure, an electronic device and a storage medium.

### BACKGROUND ART

A good cup of coffee requires a proper extraction degree, so as to extract the desired substances without excessively or insufficiently extracting the undesired ones, thereby ensuring a well-balanced and delicious taste of the coffee. In the coffee extraction process, an elevation in pressure leads to a higher extraction degree, while a reduction in pressure results in a lower extraction degree. A great many variable-pressure extraction espresso coffee machines have appeared on the market, which mainly adopt rotary pumps or gear pumps to adjust the rotational speed of the pump body so as to change the flow speed and pressure. Variable pressure is also achieved by vibration pumps. However, pressure regulation with vibration pumps is mainly realized by adjusting the Hertz frequency of the pump body or interrupting the Hertz wave band, so as to alter the piston frequency and speed of the pump body, reduce the water volume and speed of the water supplied to the water pipe, and further change the internal pressure of the pipe. Nevertheless, such an adjustment of the flow speed and flow rate fails to ensure effective and stable extraction. Therefore, ensuring adequate flow speed and water flow rate for stable extraction has become a critical technical challenge.

### SUMMARY

In view of this, the objective of the present invention is to provide a flow rate control apparatus and method for extraction pressure, an electronic device and a storage medium.

In a first aspect, an optional embodiment of the present invention provides a flow rate control apparatus for extraction pressure, wherein the control apparatus includes a first electromagnetic pump, a second electromagnetic pump, a water tank, a flow meter, a heating boiler module, a first pinhole pressure relief valve module, a second pinhole pressure relief valve module, an extraction solenoid valve, an extraction pressure sensor and an extraction head.

A first end of the first electromagnetic pump and a first end of the second electromagnetic pump are both connected to a first end of the flow meter, a second end of the flow meter is connected to the water tank, and a second end of the first electromagnetic pump and a second end of the second electromagnetic pump are both connected to a first end of the heating boiler module.

The water delivery pipes between the second end of the first electromagnetic pump, the second end of the second electromagnetic pump and the first end of the heating boiler module are respectively connected to a first end of the first pinhole pressure relief valve module and a first end of the second pinhole pressure relief valve module, and a second end of the first pinhole pressure relief valve module and a second end of the second pinhole pressure relief valve module are both connected to the water tank.

A second end of the heating boiler module is connected to a first end of the extraction solenoid valve, a second end of the extraction solenoid valve is connected to the extraction head; the extraction pressure sensor is disposed between the extraction solenoid valve and the extraction head, and the extraction pressure sensor is configured to acquire a real-time pressure value of the powder portafilter during coffee extraction.

In a second aspect, another optional embodiment of the present invention further provides a flow rate control method for extraction pressure, wherein the control method includes:
acquiring a coffee extraction pressure value input by a user on a control panel;
determining, by a central processing unit, a constant pressure value corresponding to the coffee extraction pressure value based on the coffee extraction pressure value, and activating a pinhole pressure relief valve module corresponding to the constant pressure value;
detecting whether an in-boiler pressure value collected by a boiler electronic pressure sensor is consistent with the coffee extraction pressure value after the pinhole pressure relief valve module is activated;
if not, operating a second electromagnetic pump to increase the flow rate in the water pipe and the heating boiler, determining the in-boiler pressure value by the central processing unit in real time according to the boiler pressure sensor, wherein when the in-boiler pressure value is consistent with the coffee extraction pressure value, the central processing unit stores and maintains the operating frequency of the second electromagnetic pump under the state of pressure consistency, and controls the extraction solenoid valve to open for coffee extraction.

In a third aspect, another optional embodiment of the present invention further provides an electronic device, including: a processor, a storage medium and a bus; wherein machine-readable instructions executable by the processor are stored in the storage medium. When the electronic device operates, the processor communicates with the storage medium via the bus, and the processor executes the machine-readable instructions to perform the steps of the flow rate control method for extraction pressure as described in the second aspect.

In a fourth aspect, another optional embodiment of the present invention further provides a computer-readable storage medium, wherein a computer program is stored on the computer-readable storage medium, and the computer program, when executed by a processor, performs the steps of the flow rate control method for extraction pressure as described in the second aspect.

The flow rate control apparatus and method for extraction pressure, the electronic device and the storage medium provided in the embodiments of the present invention include that the first end of the first electromagnetic pump and the first end of the second electromagnetic pump are both connected to the first end of the flow meter; the second end of the flow meter is connected to the water tank; the second ends of the first electromagnetic pump and the second electromagnetic pump are both connected to the first end of the heating boiler module; the water delivery pipes between the second ends of the first electromagnetic pump and the second electromagnetic pump and the first end of the heating boiler module are respectively connected to the first end of the first pinhole pressure relief valve module and the first end of the second pinhole pressure relief valve module; the second ends of the first pinhole pressure relief valve module and the second pinhole pressure relief valve module are both connected to the water tank; the second end of the heating boiler module is connected to the first end of the extraction solenoid valve; the second end of the extraction solenoid valve is connected to the extraction head; and the extraction pressure sensor is disposed between the extraction solenoid valve and the extraction head, thereby ensuring sufficient flow speed and water flow rate for effective and stable coffee extraction.

To make the above objectives, features and advantages of the present invention more obvious and understandable, preferred examples are specifically cited below and described in detail in conjunction with the accompanying drawings.

### BRIEF DESCRIPTION OF THE DRAWINGS

To more clearly illustrate the technical solutions of the embodiments of the present invention, the accompanying drawings required for the embodiments will be briefly introduced below. It should be understood that the following accompanying drawings only show some embodiments of the present invention and should therefore not be regarded as limiting the scope. For those ordinarily skilled in the art, other relevant accompanying drawings can also be obtained based on these accompanying drawings without exerting inventive labor.
FIG. 1 is a first structural schematic diagram of a flow rate control apparatus for extraction pressure provided in an optional example of the present invention.
FIG. 2 is a second structural schematic diagram of a flow rate control apparatus for extraction pressure provided in an optional example of the present invention.
FIG. 3 is a flow chart of a flow rate control method for extraction pressure provided in an optional example of the present invention.
FIG. 4 is a structural schematic diagram of an electronic device provided in an optional example of the present invention.

Reference numerals: 100-flow rate control apparatus for extraction pressure; 110-first electromagnetic pump; 120-second electromagnetic pump; 130-water tank; 140-flow meter; 150-heating boiler module; 151-heating boiler; 152-boiler electronic pressure sensor; 160-first pinhole pressure relief valve module; 161-first pinhole pressure relief valve; 162-first one-way solenoid valve; 170-second pinhole pressure relief valve module; 171-second pinhole pressure relief valve; 172-second one-way solenoid valve; 180-extraction solenoid valve; 190-extraction pressure sensor; 10-10-extraction head; 10-20-central processing unit; 10-30-control panel; 400-electronic device; 410-processor; 420-memory; 430-bus.

### DETAILED DESCRIPTION OF EMBODIMENTS

To make the objectives, technical solutions and advantages of the examples of the present invention clearer, the technical solutions in the examples of the present invention will be clearly and completely described below with reference to the accompanying drawings in the examples of the present invention. It should be understood that the accompanying drawings in the present invention are only for the purpose of illustration and description, and are not intended to limit the scope of protection of the present invention. In addition, it should be understood that the schematic accompanying drawings are not drawn to scale. The flow charts used in the present invention illustrate operations implemented according to some examples of the present invention. It should be understood that the operations of the flow charts cannot be performed in sequence; the operations whose sequences are not logically related can be performed in reverse order or simultaneously. Furthermore, those skilled in the art can add one or more other operations to the flow charts or remove one or more operations from the flow charts under the guidance of the content of the present invention.

Moreover, the described examples are only a part of the examples of the present invention, rather than all of the examples. Generally, the components of the examples of the present invention described and shown in the accompanying drawings herein can be arranged and designed in various different configurations. Therefore, the following detailed description of the examples of the present invention provided in the accompanying drawings is not intended to limit the scope of the claimed present invention, but merely represents selected examples of the present invention. Based on the examples in the present invention, all other examples obtained by those ordinarily skilled in the art without making inventive efforts shall fall within the scope of protection of the present invention.

To enable those skilled in the art to use the content of the present invention, the following embodiments are given in combination with a specific application scenario, i.e., "the scenario of coffee extraction". For those skilled in the art, the general principles defined herein can be applied to other examples and application scenarios without departing from the spirit and scope of the present invention. First, the applicable application scenarios of the present invention are introduced. The present invention can be applied to the technical field of coffee machines.

Studies have shown that a good cup of coffee requires a proper extraction degree to extract the desired substances without excessively or insufficiently extracting the undesired ones, thereby ensuring a well-balanced and delicious taste of the coffee. In the coffee extraction process, an elevation in pressure leads to a higher extraction degree, while a reduction in pressure results in a lower extraction degree. A great many variable-pressure extraction espresso coffee machines have appeared on the market, which mainly adopt rotary pumps or gear pumps to adjust the rotational speed of the pump body so as to change the flow speed and pressure. Variable pressure is also achieved by vibration pumps. However, pressure regulation with vibration pumps is mainly realized by adjusting the Hertz frequency of the pump body or interrupting the Hertz wave band, so as to alter the piston frequency and speed of the pump body, reduce the water volume and speed of the water supplied to the water pipe, and further change the internal pressure of the pipe. Nevertheless, such an adjustment of the flow speed and flow rate fails to ensure effective and stable extraction. Therefore, ensuring adequate flow speed and water flow rate for stable extraction has become a critical technical challenge.

Based on this, a flow rate control apparatus for extraction pressure is provided in the examples of the present invention. By means of the flow rate control apparatus for extraction pressure, effective and continuous output is achieved using two electromagnetic pumps to ensure water flow stability, and unstable water flow caused by power changes induced by pressure regulation of a single electromagnetic pump, which would otherwise affect extraction, is prevented, thereby ensuring sufficient flow speed and water flow rate for effective and stable coffee extraction.

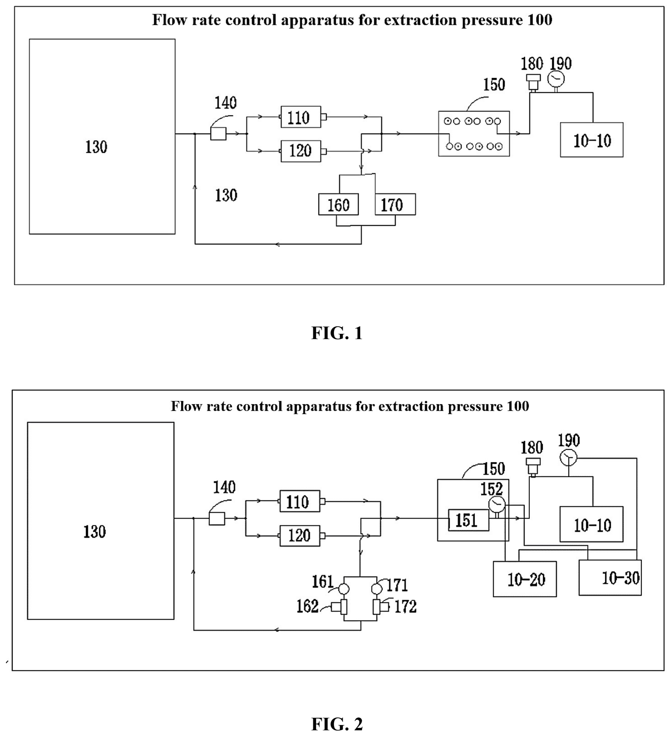

Referring to FIG. 1, wherein FIG. 1 is the first structural schematic diagram of a flow rate control apparatus for extraction pressure 100 provided in an optional example of the present invention. As shown in FIG. 1, the flow rate control apparatus for extraction pressure 100 provided in an optional example of the present invention includes a first electromagnetic pump 110, a second electromagnetic pump 120, a water tank 130, a flow meter 140, a heating boiler module 150, a first pinhole pressure relief valve module 160, a second pinhole pressure relief valve module 170, an extraction solenoid valve 180, an extraction pressure sensor 190 and an extraction head 10-10.

Specifically, a first end of the first electromagnetic pump 110 and a first end of the second electromagnetic pump 120 are both connected to a first end of the flow meter 140; a second end of the flow meter 140 is connected to the water tank 130; a second end of the first electromagnetic pump 110 and a second end of the second electromagnetic pump 120 are both connected to a first end of the heating boiler module 150; the water delivery pipes between the second ends of the first electromagnetic pump 110 and the second electromagnetic pump 120 and the first end of the heating boiler module 150 are respectively connected to a first end of the first pinhole pressure relief valve module 160 and a first end of the second pinhole pressure relief valve module 170; a second end of the first pinhole pressure relief valve module 160 and a second end of the second pinhole pressure relief valve module 170 are both connected to the water tank 130; a second end of the heating boiler module 150 is connected to a first end of the extraction solenoid valve 180; a second end of the extraction solenoid valve 180 is connected to the extraction head 10-10; an extraction pressure sensor 190 is disposed between the extraction solenoid valve 180 and the extraction head 10-10; and the extraction pressure sensor 190 is configured to acquire a real-time pressure value of the powder portafilter during coffee extraction.

Herein, the present apparatus includes two electromagnetic pumps with the same maximum pressure; the water inlets of the electromagnetic pumps are connected to the water tank 130; and the water outlets of the two electromagnetic pumps converge together and enter the heating boiler module 150. The water pipe between the convergence position of the water outlets of the two electromagnetic pumps and the heating boiler module 150 is connected to at least two groups of pinhole pressure relief valve modules with different pressures; the water outlet of the heating boiler module 150 is connected to the extraction solenoid valve 180 and then to the extraction head 10-10; an extraction electronic pressure sensor is installed between the extraction solenoid valve 180 and the extraction head 10-10 and is configured to sense the real-time pressure of the powder portafilter during extraction.

Herein, the two electromagnetic pumps include a first electromagnetic pump 110 and a second electromagnetic pump. The two electromagnetic pumps can operate independently or simultaneously, or one electromagnetic pump can operate at full frequency while the other operates at variable frequency. On the basis of the first electromagnetic pump, the pressure and flow rate inside the water pipe and the boiler are provided, and four constant pressure values can be provided according to the two pinhole pressure relief valve modules.

Further, referring to FIG. 2, wherein FIG. 2 is a second structural schematic diagram of a flow rate control apparatus for extraction pressure 100 provided in an optional example of the present invention. As shown in FIG. 2, the heating boiler module 150 includes a heating boiler 151 and a boiler electronic pressure sensor 152.

A first end of the heating boiler 151 serves as the first end of the heating boiler module 150, and the boiler electronic pressure sensor 152 is disposed on the water outlet pipe of the heating boiler 151.

Herein, the extraction pressure sensor 190 is mainly configured to detect the passive in-pipe pressure caused by the back pressure of the coffee powder, while the boiler electronic pressure sensor 152 is configured to detect the in-boiler pressure generated by the pump-body flow rate and pressure.

Further, as shown in FIG. 2, the first pinhole pressure relief valve module 160 includes a first pinhole pressure relief valve 161 and a first one-way solenoid valve 162, and the second pinhole pressure relief valve module 170 includes a second pinhole pressure relief valve 171 and a second one-way solenoid valve 172. Herein, a first end of the first pinhole pressure relief valve 161 is respectively connected to a first end of the second pinhole pressure relief valve 171, a second end of the first electromagnetic pump 110 and a second end of the second electromagnetic pump 120; a second end of the first pinhole pressure relief valve 161 is connected to a first end of the first one-way solenoid valve 162; a second end of the second pinhole pressure relief valve 171 is connected to a first end of the second one-way solenoid valve 172; and a second end of the first one-way solenoid valve 162 is respectively connected to a second end of the second one-way solenoid valve 172 and the water tank 130.

Herein, four constant pressure values can be provided according to the two pinhole pressure relief valves. For example, if the electromagnetic pump pressure is 15 bar, the relief pressure of the first pinhole pressure relief valve 161 is 6 bar, and the relief pressure of the second pinhole pressure relief valve 171 is 9 bar, under the condition of constant output of the water pump.

The first constant pressure value is defined as follows: when the first one-way solenoid valve 162 and the second one-way solenoid valve 172 on the pipe are closed, the constant pressure value inside the extraction pipe and the boiler is 15 bar, which corresponds to the maximum body pressure of the electromagnetic pump.

The second constant pressure value is defined as follows: when the first one-way solenoid valve 162 on the pipe is opened and the second one-way solenoid valve 172 is closed, the water with a pressure of 6 bar inside the pipe flows out through the first pinhole pressure relief valve 161; according to Newton's law of constant force, when the maximum pressure of the electromagnetic pump is 15 bar, the pressure inside the extraction pipe and the boiler is calculated as 15 bar - 6 bar = 9 bar. Under the condition of equal flow rate and flow speed, the pressure of 9 bar serves as the constant pressure inside the extraction pipe and the boiler, and thus the second constant pressure value is 9 bar.

The third constant pressure value is defined as follows: when the first one-way solenoid valve on the pipe is closed and the second one-way solenoid valve 172 is opened, the water with a pressure of 9 bar inside the pipe flows out through the second pinhole pressure relief valve 171; according to Newton's law of constant force, when the maximum pressure of the electromagnetic pump is 15 bar, the pressure inside the extraction pipe and the boiler is calculated as 15 bar - 9 bar = 6 bar. Under the condition of equal flow rate and flow speed, the pressure of 6 bar is the constant pressure inside the extraction pipe and the boiler, and thus the third constant pressure value is 6 bar.

The fourth constant pressure value is defined as follows: when both the first one-way solenoid valve and the second one-way solenoid valve 172 on the pipe are opened, the pressure inside the extraction pipe and the boiler is released through the first pinhole pressure relief valve 161 and the second pinhole pressure relief valve 171. When the two pinhole pressure relief valves release pressure simultaneously, the relief pressure = the maximum relief pressure of the pressure relief valve + the relief pressure difference, i.e., 9 + (9 - 6) = 12 bar. Therefore, the pressure inside the extraction pipe and the boiler is calculated as 15 bar - 12 bar = 3 bar, and thus the fourth constant pressure value is 3 bar.

In a specific example, when the solenoid valves of the pinhole pressure relief valves are fully closed, no pressure relief is performed, and thus the pressure and flow rate inside the pipe reach the maximum pressure and flow rate of the first electromagnetic pump. When the first one-way solenoid valve 162 of the first pinhole pressure relief valve 161 is opened while the second one-way solenoid valve 172 of the second pinhole pressure relief valve 171 is closed, part of the pressure and flow rate inside the pipe flow back to the water tank 130 through the first pinhole pressure relief valve 161, and the constant pressure retained inside the pipe, namely Constant Pressure 1 = the maximum pressure of the pump body (Pump Pressure) - the relief pressure of the first pinhole pressure relief valve 161 (Relief Pressure 1). When the first one-way solenoid valve 162 of the first pinhole pressure relief valve 161 is closed while the second one-way solenoid valve 172 of the second pinhole pressure relief valve 171 is opened, part of the pressure and flow rate inside the pipe flow back to the water tank 130 through the second pinhole pressure relief valve 171, and the constant pressure retained inside the pipe, namely Constant Pressure 2 = the maximum pressure of the pump body (Pump Pressure) - the relief pressure of the second pinhole pressure relief valve 171 (Relief Pressure 2). When both the first one-way solenoid valve 162 of the first pinhole pressure relief valve 161 and the second one-way solenoid valve 172 of the second pinhole pressure relief valve 171 are opened, part of the pressure and flow rate inside the pipe flow back to the water tank 130 through the first and second pinhole pressure relief valves 171, and the constant pressure inside the pipe, namely Constant Pressure 3 = (Pump Pressure - Relief Pressure 1) - (Pump Pressure - Relief Pressure 2). In this way, the order of the constant pressures provided by the electromagnetic pump inside the pipe is: maximum pressure of the electromagnetic pump > Constant Pressure 1 > Constant Pressure 2 > Constant Pressure 3. This arrangement can effectively enable the vibration pump to provide effective and continuous output to ensure water flow stability, and prevent unstable water flow caused by changes in the operating frequency induced by pressure regulation of a single electromagnetic pump, which would otherwise affect extraction.

Herein, when two pinhole pressure relief valves are provided, the maximum total number of pressure combinations inside the pipe and the boiler is 3. When n pinhole pressure relief valves are provided, the maximum total number of pressure combinations inside the pipe and the boiler is calculated as: number of pressure relief combinations + maximum pressure value of the pump.

Further, as shown in FIG. 2, the control apparatus further includes a central processing unit 10-20 and a control panel 10-30. Herein, the central processing unit 10-20 and the control panel are both electrically connected to the extraction pressure sensor 190 and the boiler electronic pressure sensor 152. A display screen and input buttons are further provided on the control panel.

Herein, the present apparatus is provided with a CPU and a control panel 10-30, wherein the CPU and the control panel 10-30 are connected to the electrical components and sensors inside the coffee machine, and the control panel can enable users to set the desired pressure and variable pressure parameters.

A flow rate control apparatus for extraction pressure is provided in an optional example of the present invention, wherein the control apparatus includes a first electromagnetic pump, a second electromagnetic pump, a water tank, a flow meter, a heating boiler module, a first pinhole pressure relief valve module, a second pinhole pressure relief valve module, an extraction solenoid valve, an extraction pressure sensor and an extraction head. Herein, the first end of the first electromagnetic pump and a first end of the second electromagnetic pump are both connected to a first end of the flow meter; a second end of the flow meter is connected to the water tank; a second end of the first electromagnetic pump and a second end of the second electromagnetic pump are both connected to a first end of the heating boiler module; the water delivery pipes between the second ends of the first electromagnetic pump and the second electromagnetic pump and the first end of the heating boiler module are respectively connected to a first end of the first pinhole pressure relief valve module and a first end of the second pinhole pressure relief valve module; a second end of the first pinhole pressure relief valve module and a second end of the second pinhole pressure relief valve module are both connected to the water tank; a second end of the heating boiler module is connected to a first end of the extraction solenoid valve; a second end of the extraction solenoid valve is connected to the extraction head; an extraction pressure sensor is provided between the extraction solenoid valve and the extraction head; and the extraction pressure sensor is configured to acquire a real-time pressure value of the powder portafilter during coffee extraction. By means of the flow rate control apparatus for extraction pressure, effective and continuous output is achieved using two electromagnetic pumps to ensure water flow stability, and unstable water flow caused by power changes induced by pressure regulation of a single electromagnetic pump, which would otherwise affect extraction, is prevented, thereby ensuring sufficient flow speed and water flow rate for effective and stable coffee extraction.

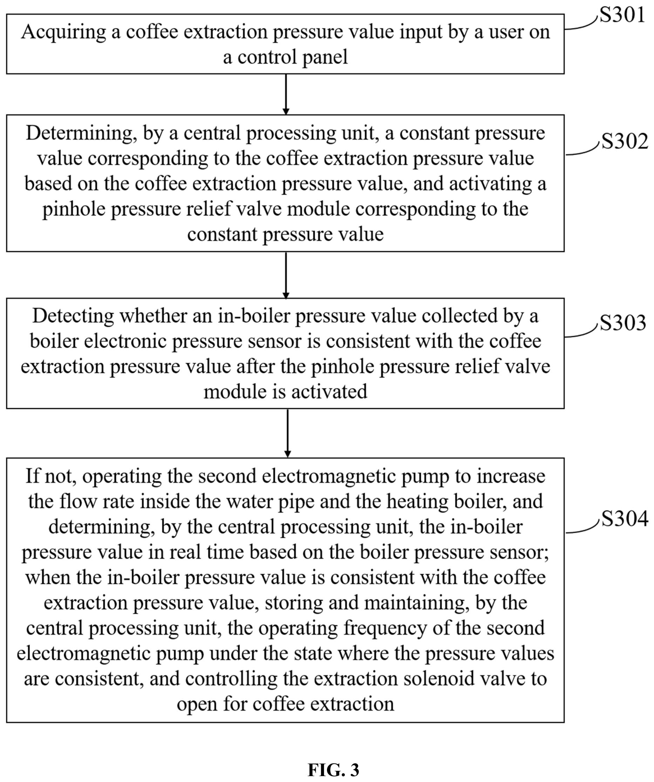

Referring to FIG. 3, wherein FIG. 3 is a flow chart of a flow rate control method for extraction pressure provided in an optional example of the present invention. As shown in FIG. 3, the control method provided in an optional example of the present invention includes following steps.

S301: Acquiring a coffee extraction pressure value input by a user on a control panel.

In this step, the coffee extraction pressure value input by the user on the control panel is acquired.

S302: Determining, by a central processing unit, a constant pressure value corresponding to the coffee extraction pressure value based on the coffee extraction pressure value, and activating a pinhole pressure relief valve module corresponding to the constant pressure value.

In this step, the central processing unit determines a constant pressure value corresponding to the coffee extraction pressure value based on the coffee extraction pressure value, and activates the pinhole pressure relief valve module corresponding to the constant pressure value to start the operation of the first electromagnetic pump.

Herein, the constant pressure values are calculated in advance; during extraction, the CPU calculates the closest constant pressure value according to the coffee extraction pressure value input by the user.

In an optional example, the constant pressure value is determined through the following steps:
A: when both the first pinhole pressure relief valve module and the second pinhole pressure relief valve module are closed, the constant pressure is the maximum pressure value corresponding to the target electromagnetic pump;
B: when the first pinhole pressure relief valve module is open and the second pinhole pressure relief valve module is closed, the constant pressure is the pressure difference between the maximum pressure value and the pressure value discharged through the first pinhole pressure relief valve;
C: when the first pinhole pressure relief valve module is closed and the second pinhole pressure relief valve module is open, the constant pressure value is the pressure difference between the maximum pressure value and the pressure value discharged through the second pinhole pressure relief valve; and
D: when both the first pinhole pressure relief valve module and the second pinhole pressure relief valve module are open, the constant pressure value is the pressure difference between the maximum pressure value and the relief pressure.

Herein, the method for determining the constant pressure value will not be further described in detail.

S303: Detecting whether an in-boiler pressure value collected by a boiler electronic pressure sensor is consistent with the coffee extraction pressure value after the pinhole pressure relief valve module is activated.

In this step, after the pinhole pressure relief valve module is activated, it is detected whether the in-boiler pressure value collected by the boiler electronic pressure sensor is consistent with the coffee extraction pressure value.

S304: If not, operating a second electromagnetic pump to increase the flow rate in the water pipe and the heating boiler, determining the in-boiler pressure value by the central processing unit in real time according to the boiler pressure sensor, wherein when the in-boiler pressure value is consistent with the coffee extraction pressure value, the central processing unit stores and maintains the operating frequency of the second electromagnetic pump under the state of pressure consistency, and controls the extraction solenoid valve to open for coffee extraction.

**In** this step, if the pressure values are inconsistent, the second electromagnetic pump operates to increase the flow rate inside the water pipe and the heating boiler. The central processing unit determines the in-boiler pressure value in real time based on the boiler pressure sensor. When the in-boiler pressure value is consistent with the coffee extraction pressure value, the central processing unit stores and maintains the operating frequency of the second electromagnetic pump under the state where the pressure values are consistent, and controls the extraction solenoid valve to open for coffee extraction. If the pressure values are consistent, the operating state remains second electromagnetic pump being not in operation.

Herein, a user can select different boiler pressures for extraction as required. During extraction, the CPU calculates the closest constant pressure value according to the coffee extraction pressure value input by the user, and then activates the solenoid valve of the corresponding pinhole pressure relief valve to start the operation of the first electromagnetic pump. According to the comparison of the pressure value detected by the boiler electronic pressure sensor with the coffee extraction pressure value selected by the user, if the in-boiler pressure value is equal to the coffee extraction pressure value, the second electromagnetic pump does not operate and the current operating state is maintained. If the in-boiler pressure value is not equal to the coffee extraction pressure value, the second electromagnetic pump starts to intervene and operate at full frequency or variable frequency. When the second electromagnetic pump operates, the flow rates inside the pipe and the boiler are increased, and an increase in flow rate leads to an increase in pressure. When the CPU confirms that the in-boiler pressure is equal to the coffee extraction pressure value, the CPU records and maintains the real-time frequency of the second electromagnetic pump, and opens the extraction solenoid valve for extraction. The values recorded by the CPU are saved as reference values for subsequent extractions. This adjustment method is referred to as a constant-pressure and variable-pressure control method.

In another specific example, when a coffee extraction pressure value is input by a user, a search is first conducted in the database to check whether the coffee extraction pressure value exists. If yes, the operating frequency of the second electromagnetic pump corresponding to the coffee extraction pressure value is determined, the operating frequency of the second electromagnetic pump is directly adjusted, and the extraction solenoid valve is controlled to open for coffee extraction, without the need to re-determine the operating frequency of the second electromagnetic pump corresponding to the coffee extraction pressure value.

In an optional embodiment, the control method further includes the following steps.

a: After acquiring the adaptive pressure extraction information input by the user on the control panel, the flow rate control apparatus for extraction pressure performs extraction at the maximum coffee extraction pressure value, and transmits the extraction pressure value collected by the extraction pressure sensor and the in-boiler pressure value collected by the boiler electronic pressure sensor to the central processing unit.

Herein, after the adaptive pressure extraction information input by the user on the control panel is acquired, extraction is performed at the maximum coffee extraction pressure value by the flow rate control apparatus for extraction pressure, and the extraction pressure value collected by the extraction pressure sensor and the in-boiler pressure value collected by the boiler electronic pressure sensor are transmitted to the central processing unit.

The higher the pressure inside the boiler is, the higher the pressure formed inside the pipe is. When the pressure inside the boiler is lower than the back pressure of the coffee powder, insufficient water during extraction prevents the water from passing through the coffee powder at a normal extraction speed, thus prolonging the water retention time in the coffee powder and causing over-extraction. Conversely, when the pressure inside the boiler is higher than the back pressure of the coffee powder, the pressure during extraction shortens the water retention time in the coffee powder and causes under-extraction for coffee.
b: After controlling the pinhole pressure relief valve module to activate based on the in-boiler pressure value and the extraction pressure value, the central processing unit performs extraction on the remaining coffee powder at a pressure value equal to both the in-boiler pressure value and the extraction pressure value.

Herein, the central processing unit controls the pinhole pressure relief valve module to activate according to the in-boiler pressure value and the extraction pressure value, so that the remaining coffee powder is extracted at a pressure value equal to both the in-boiler pressure value and the extraction pressure value.

When the user selects adaptive pressure extraction via the control panel, the machine starts extraction at the maximum pressure during the extraction process. The extraction pressure sensor and the boiler electronic pressure sensor transmit the real-time pressure signals to the CPU, and the CPU performs pressure comparison. When the pressure detected by the extraction pressure sensor stabilizes, after two seconds, the CPU adjusts the pressure based on the pressure detected by the extraction pressure sensor by means of the constant-pressure and variable-pressure control method to make the in-boiler pressure value detected by the boiler electronic pressure sensor equal to the extraction pressure value, and then proceeds with the subsequent extraction.

A flow rate control method for extraction pressure is provided in an optional example of the present invention, wherein the control method includes: acquiring a coffee extraction pressure value input by a user on a control panel; determining, by the central processing unit, a constant pressure value corresponding to the coffee extraction pressure value based on the coffee extraction pressure value, and activating the pinhole pressure relief valve module corresponding to the constant pressure value; after the pinhole pressure relief valve module is activated, detecting whether the in-boiler pressure value collected by the boiler electronic pressure sensor is consistent with the coffee extraction pressure value; if not, operating the second electromagnetic pump to increase the flow rate inside the water pipe and the heating boiler, and determining, by the central processing unit, the in-boiler pressure value in real time based on the boiler pressure sensor; when the in-boiler pressure value is consistent with the coffee extraction pressure value, storing and maintaining, by the central processing unit, the operating frequency of the second electromagnetic pump under the state where the pressure values are consistent, and controlling the extraction solenoid valve to open for coffee extraction. By means of the flow rate control apparatus for extraction pressure, effective and continuous output is achieved using two electromagnetic pumps to ensure water flow stability, and unstable water flow caused by power changes induced by pressure regulation of a single electromagnetic pump, which would otherwise affect extraction, is prevented, thereby ensuring sufficient flow speed and water flow rate for effective and stable coffee extraction.

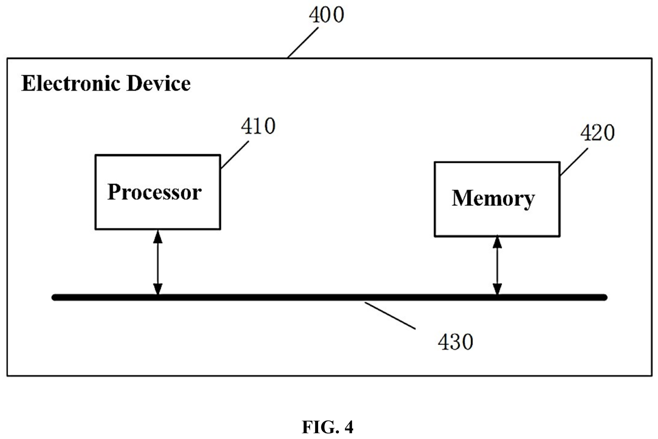

Referring to FIG. 4, wherein FIG. 4 is a structural schematic diagram of an electronic device provided in an optional example of the present invention. As shown in FIG. 4, the electronic device 400 includes a processor 410, a memory 420 and a bus 430.

The memory 420 stores machine-readable instructions executable by the processor 410. When the electronic device 400 operates, the processor 410 communicates with the memory 420 via the bus 430. When executed by the processor 410, the machine-readable instructions can perform the steps of the flow rate control method for extraction pressure in the method example shown in FIG. 3 above. For specific implementation, reference can be made to the method example, which will not be further described herein.

A computer-readable storage medium is further provided in an optional example of the present invention, wherein a computer program stored on the computer-readable storage medium. When the computer program is run by the processor, it can perform the steps of the flow rate control method for extraction pressure in the method example shown in FIG. 3 above. For specific implementation, reference can be made to the method example, which will not be further described herein.

Those skilled in the art can clearly understand that, for the convenience and conciseness of description, the specific working processes of the above-described system, apparatus and unit can refer to the corresponding processes in the aforementioned method examples, which will not be further described herein.

It should be understood that in the several examples provided by the present invention, the disclosed system, apparatus and method can be implemented in other manners. The apparatus examples described above are only schematic, for example, the division of the units is only a logical function division, and there can be other division ways in actual implementation; for another example, multiple units or components can be combined or integrated into another system, or some features can be ignored or not executed. In addition, the mutual coupling or direct coupling or communication connection shown or discussed can be through some communication interfaces, the indirect coupling or communication connection of apparatus or units; it can be in electrical, mechanical, or other forms.

The units described as separate components may or may not be physically separated, and the components shown as units may or may not be physical units, that is, they can be located in one place, or can be distributed on multiple network units. Some or all of the units can be selected according to actual needs to achieve the purpose of the solution of the present embodiment.

In addition, each functional unit described in the examples of the present invention can be integrated into one processing unit; alternatively, each unit can be physically disposed independently, or two or more such units can be combined into a single unit.

**If** the functions are implemented in the form of software functional units and sold or used as independent products, they can be stored in a non-volatile computer-readable storage medium executable by a processor. Based on such understanding, the technical solutions of the present invention, in essence, or the parts contributing to the prior art, or the parts of the technical solutions, can be embodied in the form of software products. The computer software products are stored in a storage medium and include several instructions for enabling a computer device (which may be a personal computer, a server, a network device, etc.) to execute all or part of the steps of the methods described in the examples of the present invention. The aforementioned storage media include various media that can store program codes, such as USB flash drives, mobile hard disks, Read-Only Memory (ROM), Random Access Memory (RAM), magnetic disks, or optical discs.

Finally, it should be noted that the above-mentioned examples are only specific embodiments of the present invention, used to explain the technical solution of the present invention, rather than limiting it. The protection scope of the present invention is not limited thereto. Although the present invention has been described in detail with reference to the foregoing examples, those ordinarily skilled in the art should understand that any person skilled in the technical field can still modify the technical solutions recorded in the foregoing examples, easily conceive of changes, or equivalently replace some of the technical features within the technical scope disclosed by the present invention. All such modifications, changes or replacements do not make the essence of the corresponding technical solutions deviate from the spirit and scope of the technical solutions of the examples of the present invention, and shall be included in the protection scope of the present invention. Therefore, the protection scope of the present invention shall be subject to the protection scope of the claims.

## Claims

1. A flow rate control apparatus for an extraction pressure, **characterized in that** the control apparatus comprises a first electromagnetic pump, a second electromagnetic pump, a water tank, a flow meter, a heating boiler module, a first pinhole pressure relief valve module, a second pinhole pressure relief valve module, an extraction solenoid valve, an extraction pressure sensor and an extraction head;
a first end of the first electromagnetic pump and a first end of the second electromagnetic pump are both connected to a first end of the flow meter; a second end of the flow meter is connected to the water tank; and a second end of the first electromagnetic pump and a second end of the second electromagnetic pump are both connected to a first end of the heating boiler module;
water delivery pipes between the second end of the first electromagnetic pump, the second end of the second electromagnetic pump and the first end of the heating boiler module are respectively connected to a first end of the first pinhole pressure relief valve module and a first end of the second pinhole pressure relief valve module; and a second end of the first pinhole pressure relief valve module and a second end of the second pinhole pressure relief valve module are both connected to the water tank; and
a second end of the heating boiler module is connected to a first end of the extraction solenoid valve; a second end of the extraction solenoid valve is connected to the extraction head; the extraction pressure sensor is disposed between the extraction solenoid valve and the extraction head, and the extraction pressure sensor is configured to acquire a real-time pressure value of a powder portafilter during a coffee extraction.

2. The control apparatus according to claim 1, wherein the heating boiler module comprises a heating boiler and a boiler electronic pressure sensor; and
a first end of the heating boiler serves as the first end of the heating boiler module, and the boiler electronic pressure sensor is disposed on a water outlet pipe of the heating boiler.

3. The control apparatus according to claim 1, wherein the first pinhole pressure relief valve module comprises a first pinhole pressure relief valve and a first one-way solenoid valve, and the second pinhole pressure relief valve module comprises a second pinhole pressure relief valve and a second one-way solenoid valve; and
a first end of the first pinhole pressure relief valve is respectively connected to a first end of the second pinhole pressure relief valve, a second end of the first electromagnetic pump and a second end of the second electromagnetic pump; a second end of the first pinhole pressure relief valve is connected to a first end of the first one-way solenoid valve; a second end of the second pinhole pressure relief valve is connected to a first end of the second one-way solenoid valve; and a second end of the first one-way solenoid valve is respectively connected to a second end of the second one-way solenoid valve and the water tank.

4. The control apparatus according to claim 2, wherein the control apparatus further comprises a central processing unit and a control panel; and
the central processing unit and the control panel are both electrically connected to the extraction pressure sensor and the boiler electronic pressure sensor.

5. The control apparatus according to claim 4, wherein a display screen and an input button are further provided on the control panel.

6. A flow rate control method for an extraction pressure, **characterized in that** the control method is applied to the flow rate control apparatus for the extraction pressure according to any one of claims 1-5, and the control method comprises:
acquiring a coffee extraction pressure value input by a user on a control panel;
determining, by a central processing unit, a constant pressure value corresponding to the coffee extraction pressure value based on the coffee extraction pressure value, and activating a pinhole pressure relief valve module corresponding to the constant pressure value;
detecting whether an in-boiler pressure value collected by a boiler electronic pressure sensor is consistent with the coffee extraction pressure value after the pinhole pressure relief valve module is activated; and
in response to the in-boiler pressure value collected by the boiler electronic pressure sensor being not consistent with the coffee extraction pressure value, operating the second electromagnetic pump to increase a flow rate in a water pipe and a heating boiler, and determining, by the central processing unit, the in-boiler pressure value in real time based on a boiler pressure sensor; when the in-boiler pressure value is consistent with the coffee extraction pressure value, storing and maintaining, by the central processing unit, an operating frequency of the second electromagnetic pump under a state of pressure consistency, and controlling an extraction solenoid valve to open for a coffee extraction.

7. The control method according to claim 6, wherein the constant pressure value is determined through following steps:
when both a first pinhole pressure relief valve module and a second pinhole pressure relief valve module are closed, the constant pressure is a maximum pressure value corresponding to a target electromagnetic pump;
when the first pinhole pressure relief valve module is open and the second pinhole pressure relief valve module is closed, the constant pressure is a pressure difference between the maximum pressure value and a pressure value discharged through a first pinhole pressure relief valve;
when the first pinhole pressure relief valve module is closed and the second pinhole pressure relief valve module is open, the constant pressure value is a pressure difference between the maximum pressure value and a pressure value discharged through a second pinhole pressure relief valve; and
when both the first pinhole pressure relief valve module and the second pinhole pressure relief valve module are open, the constant pressure value is a pressure difference between the maximum pressure value and a relief pressure.

8. The control method according to claim 6, wherein the control method further comprises:
after acquiring an adaptive pressure extraction information input by a user on the control panel, performing an extraction at a maximum coffee extraction pressure value, and transmitting an extraction pressure value collected by the extraction pressure sensor and an in-boiler pressure value collected by the boiler electronic pressure sensor to the central processing unit by the flow rate control apparatus for the extraction pressure; and
after controlling the pinhole pressure relief valve module to activate based on the in-boiler pressure value and the extraction pressure value, performing extraction on remaining coffee powder at a pressure value equal to both the in-boiler pressure value and the extraction pressure value by the central processing unit.

9. An electronic device, **characterized by** comprising: a processor, a memory, and a bus, wherein the memory stores a machine-readable instruction executable by the processor; when the electronic device operates, the processor communicates with the memory via the bus; and when the machine-readable instruction is executed by the processor, the steps of the flow rate control method for the extraction pressure according to any one of claims 6-8 are performed.

10. A computer-readable storage medium, **characterized in that** a computer program is stored on the computer-readable storage medium, and the computer program, when executed by a processor, performs the steps of the flow rate control method for the extraction pressure according to any one of claims 6-8.
